# EUROPEAN PATENT APPLICATION

(11) **EP 1 595 611 A2**
(43) Date of publication of application: **16.11.2005**
(21) Application number: 05075959.6
(22) Date of filing: 22.04.2005
(51) Int. Cl.: B21C 37/15

(54) **Tubular blank**

(30) Priority: 27.04.2004 EP 04076269
(71) Applicant: Corus Staal BV, 1970 CA Ijmuiden (NL)
(72) Inventor: Van Giezen, Maurice Gerardus Maria, 2114 DS Vogelenzang (NL); Kelder, Maarten Hendrik, 1011 BT Amsterdam (NL)
(74) Representative: Kruit, Jan

(57) **Abstract**

The invention relates to a tubular blank (3,7), which has been produced from an essentially planar sheet (1) of metal by forming the sheet (1), wherein the tubular blank (3,7) has been provided with a seam.

According to the invention, a patch (2,6) for reinforcing the tubular blank (3,7) locally has been connected to the planar sheet (1) before the forming and seaming of the tubular blank (3,7).

The invention also relates to a method for producing such a tubular blank (3,7) and to the used thereof.

## Description

The invention relates to a tubular blank, which has been produced from an essentially planar sheet of metal by forming the sheet, wherein the tubular blank has been provided with a seam.

Tubular blanks are known construction elements that are often used in automotive manufacturing. A tubular blank is formed from a sheet which is formed into a tube by press forming or U-O forming or any other way, such that two opposite edges of the sheet are adjacent to each other. These edges are then connected to form a seam, usually by laser welding. Laser welding has the advantage that a seam produced by laser welding is more flexible than a seam produced by electro-resistance welding, resulting in a tubular blank that can be hydro-formed into complicated shapes. Tubular blanks can be produced in wall thickness-diameter ratios that cannot be produced in conventional tube making. Usually, tubular blanks are produced having a circular cross-section.

Often other parts have to be connected to a hydro-formed tubular blank. To be able to do so, usually a connecting element is attached to the hydro-formed tubular blank. In other cases the tubular blank has to be reinforced locally. In such cases a tailored tubular blank can be used, that is made of two different sheets that are welded together to form a sheet of two parts with different characteristics, which sheet is formed into a tubular blank and welded. It is also possible to attach a separate piece of material to the tubular blank, but in this case that separate piece has to have the right (complicated) form to place it against the tubular blank.

It is an object of the invention to provide a tubular blank as described above in a different way, preferably such that the tubular blank is easier, cheaper and/or faster to produce.

According to a first aspect of the invention this object has been reached with a tubular blank which has been produced from an essentially planar sheet of metal by forming the sheet, wherein the tubular blank has been provided with a seam, wherein a patch for reinforcing the tubular blank locally has been connected to the planar sheet before the forming and seaming of the tubular blank.

This tubular blank has the advantage that the patch has been connected to the sheet before the tubular blank has been formed. When the sheet is still planar, it is easy to connect the patch to the sheet. The sheet with the patch is formed into the tubular blank after the patch has been connected to the planar sheet. In this way there is no need to provide the patch with a specific form that has to fit to the form of the tubular blank, which is often complicated, especially when the tubular blank has already been hydro-formed.

A patch is useful for locally reinforcing the tubular blank during mechanic or hydraulic deformation, such as bending or hydro-forming. The patch can have all kinds of different shapes, depending on the intended use thereof. The patch can also be useful to reinforce a tubular blank when the tubular blank is ultimately used as a crash absorbing element, or when the tubular blank has to be reinforced locally to provide a connective point.

Preferably, the tubular blank has been provided with a laser welded seam. A tubular blank having a laser welded seam can be hydro-formed into complicated shapes without the risk of rupture of the tubular blank.

According to a preferred embodiment, the element has been formed from a metal and has been connected to the sheet by using adhesive, by soldering, by magnetic pulse welding, or by welding, preferably by laser welding. Often the use of a metal element is preferred in view of the use that has to be made of the tubular blank.

According to a second preferred embodiment, the patch has been formed from a metal and has been connected to the sheet by welding interruptedly, preferably by spotwelding or by stitch laser welding. Using spotwelding or stitch welding provides a fast way to connect the patch to the planar sheet.

According to a first possible embodiment the patch has been connected to the side of the planar sheet forming the outside of the tubular blank. After the forming of the tubular blank the patch is thus present at the spot where it is needed to fulfill its function, without the need to position the patch and to connect it to an already formed tubular blank.

According to a second possible embodiment the planar sheet has been formed around the patch. The tubular blank in this way can be provided internally with a patch in an easy way, which will be very difficult after the tubular blank has been formed.

According to a second aspect of the invention a method for producing a tubular blank as described above is provided, the method comprising the following steps:
- providing an essentially planar sheet of metal;
- connecting a patch to the sheet;
- forming the sheet into a tube;
- providing the tube with a seam.

This method provides the tubular blank with the patch according to the first aspect of the invention.

Preferably, the tubular blank is formed by mechanical or hydraulic deformation, such as hydro-forming or bending, into a tube with a non-rectilinear shape. Especially when the tubular sheet is deformed, such as bended or hydro-formed, the tube gets an irregular shape, which would make it difficult to apply a patch after deformation. The method according to the invention by which the patch is applied to the planar sheet thus results in a very easy and cost-effective reinforcement.

According to a third aspect of the invention an automotive part comprising a tubular blank according to the first aspect of the invention is provided, the tubular blank having been mechanical or hydraulic deformed, such as by bending or hydro-forming. Complicated hydro-formed tubular blanks having reinforcing patches and/or connecting elements are frequently used as parts for automotive production.

The invention will be elucidated with reference to the attached drawing, wherein:
Fig. 1a schematically shows a planar sheet with a patch;
Fig. 1b schematically shows a tubular blank with the patch formed from the sheet of Fig. 1a;
Fig. 2a schematically shows a planar sheet with two patches;
Fig. 2b schematically shows a tubular blank with two reinforcing patches formed from the sheet of Fig. 2b;

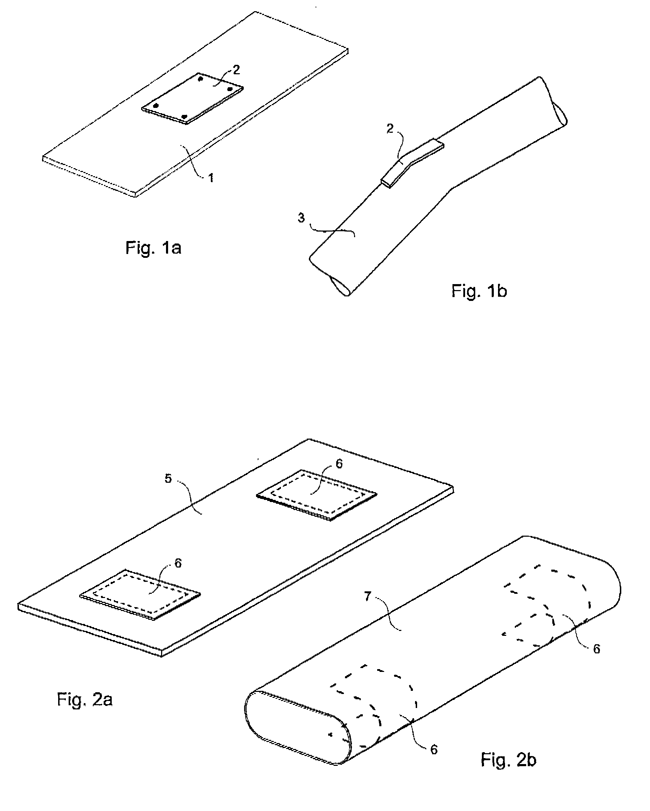

Figure 1a shows a planar metal sheet 1 to which a metal patch 2 has been attached. A metal patch 2 can for instance be connected to the sheet using spotwelding as shown in Figure 1, but other connecting means are also possible, such as an adhesive.
Figure 1b shows the planar sheet 1 of Figure 1a formed into a tubular blank 3. The patch 2 has been formed together with the forming of the tubular blank 3, on the outside of the tubular blank. The patch 2 has been placed on the planar blank 2 such that it is present on the tubular blank 3 where a reinforcement is necessary, as shown on the place where the tubular blank has been bended. In this way the tubular blank can be kept as thin as possible without wrinkling or rupture.

Figure 2a shows a planar metal sheet 5 to which two metal patches 6 have been connected using stitch welding. Stitch welding provides a good connection of the patched to the sheet, but is faster than the continuous welding of patches to a sheet because the welding length is shorter, and also faster than the welding of two sheets of different thickness to form a tailored tubular blank. Moreover, a tailored tubular blank is usually more expensive because the thicker area is larger.

Figure 2b shows that the sheet 5 with patches 6 has been formed into a tubular blank 7 wherein the patches 6 are present at the inside of the tubular blank. (The welding seam of the tubular blank is not shown in any of the figures). The patches 6 here form reinforcements in the tubular blank, for instance when the tubular blank 7 is used as a bumper beam for a vehicle and the patches are places such that they are present in front of the front longitudinals of the vehicle. The bumper beam thus can take up more crash energy in case of a crash. The patches 6 are shown as being rectangular, but of course they can have any suitable form, such as essentially 8-shaped. Moreover, the patches can be formed before they are attached to the planar sheet, for instance such that they posses a middle part that is kept at a distance from the planar sheet.

The patches as shown in Figures 1 and 2 will be often used when the tubular blank has to be deformed by mechanical or hydraulic deformation, such as by bending or hydro forming. These deformation are often used when the tubular blanks are used for automotive purposes, and the patches can in such cases be used to prevent rupture or wrinkling of the blank, for instance when the tubular blank is bended, or when a sharp angle is formed during hydro-forming.

The patches as shown can also be used to locally reinforce the tubular blank where such a reinforcement is necessary in a tubular blank for automotive purposes, such as a reinforcement for a hinge in a B-pillar.

The patches can also be used in energy absorbing automotive parts, such that more energy will be absorbed during a crash.

It will be understood that many alternatives of the shown patches can be used. The tubular blanks formed with the patches can also be used for many purposes, also outside the automotive industry.

## Claims

1. Tubular blank which has been produced from an essentially planar sheet of metal by forming the sheet, wherein the tubular blank has been provided with a seam, **characterized in that** a patch for reinforcing the tubular blank locally has been connected to the planar sheet before the forming and seaming of the tubular blank.

2. Tubular blank according to claim 1, wherein the tubular blank has been provided with a laser welded seam.

3. Tubular blank according to claim 1 or 2, wherein the patch has been formed from a metal and has been connected to the sheet by using adhesive, by soldering, by magnetic pulse welding, or by welding, preferably by laser welding.

4. Tubular blank according to claim 1 or 2, wherein the patch has been formed from a metal and has been connected to the sheet by welding interruptedly, preferably by spotwelding or by stitch laser welding.

5. Tubular blank according to any one of claims 1 - 4, wherein the patch has been connected to the side of the planar sheet forming the outside of the tubular blank.

6. Tubular blank according to any one of claims 1 - 4, wherein the planar sheet has been formed around the patch.

7. Method for producing a tubular blank according to any one of the preceding claims, **characterized in that** the method comprises the following steps:
- providing an essentially planar sheet of metal; connecting a patch to the sheet;
- forming the sheet into a tube;
- providing the tube with a seam.

8. Method according to claim 7, wherein the tubular blank is formed by mechanical or hydraulic deformation, such as hydro-forming or bending, into a tube with a non-rectilinear shape.

9. Automotive part comprising a tubular blank according to any one of the claims 1 - 6, wherein the tubular blank has been mechanical or hydraulic deformed, such as by bending or hydro-forming.
